# EUROPEAN PATENT SPECIFICATION

(11) **EP 1 576 792 B1**
(45) Date of publication and mention of the grant of the patent: **18.11.2009**
(21) Application number: 03753737.0
(22) Date of filing: 06.10.2003
(51) Int. Cl.: H04M 1/725, G06F 17/27

(54) **METHOD OF FILTERING TEXT MESSAGES IN A COMMUNICATION DEVICE**
VERFAHREN ZUM FILTERN VON TEXTNACHRICHTEN IN EINEM KOMMUNIKATIONSGERÄT
PROCEDE DE FILTRAGE DE MESSAGES TEXTUELS DANS UN DISPOSITIF DE COMMUNICATION

(30) Priority: 27.12.2002 GB 0230219
(43) Date of publication of application: 21.09.2005
(73) Proprietor: TTPCOM Limited, Royston, Hertfordshire, SG8 6HQ (GB)
(72) Inventor: TINDALL, Paul Geoffrey, Renhold, Bedfordshire MK41 0LP (GB)
(74) Representative: Wallin, Nicholas James
(86) International application number: PCT/GB2003/004292
(87) International publication number: WO 2004/059959

(56) References cited:
- WO-A-02/07468
- US-A- 5 796 948
- US-A- 5 832 212
- US-A- 5 966 652
- US-A1- 2002 143 827

## Description

This invention relates to a method of filtering messages received by a telecommunications device such as a mobile phone, and in particular to a method of filtering the content of text messages to remove or modify text that may be offensive to the user of the device.

An increasingly important feature of modem mobile phones is the ability to send SMS messages (text messages). Mobile text messaging has become very popular, particularly for the young. Usually, the receiver of a text message knows the sender of that message, but many messages are unsolicited, for the purposes of, for example, advertising. There is a growing concern that the content of some messages, either solicited or unsolicited, may cause offence to the recipient, and it is impossible for the recipient to know whether a message is likely to cause offence without displaying and reading it.

Mobile network operators have some responsibility to prevent such messages being delivered, and are investing in server technology to filter text messages, so that they don't end up on users' mobile phones. However, because the number of messages being past through each network is very large, it requires power machines to process all of them reliably. One way in which a mobile network operator can filter text messages is to apply a generic set of rules for the filtering of likely offensive material (such as profanity, racsim etc). These rules do, however, tend to be general, as they must relate to material which is likely to be deemed offensive by the majority of users.

US 5,832,212 discloses a sensoring browser method and apparatus for internet viewing in which a user profile including user selective sensoring parameters is stored, and data packet contents are received and compared with the user selective sensoring parameter.

US 5,966,652 discloses a system that uses conventional text messaging capabilities of cellular telephone systems to embed one or more call-back telephone numbers. A start delimiter is used to separate a text data portion corresponding to the call-back telephone number from the text message.

The aim of the invention is to provide a method of filtering messages to remove offensive material in such a way that a recipient can tailor the filtering rules so as to remove or modify the content of received messages that is offensive to that user.

The present invention provides a method of filtering text messages, the method comprising the steps of:-
a) inputting a rule set;
b) reading an incoming message;
c) modifying the message if that message breaks a rule of the rule set; and
d) displaying the modified message;
wherein the rule set comprises a plurality of rules, each of which relates to a respective predetermined message content, characterised in that the text message are received by a mobile telecommunications device and the rule set is input into the telecommunications device by downloading the rule set from a network operator.

In a preferred embodiment, step b) may include the step of parsing the incoming text message, and step c) may be such as to delete the predetermined text content, or to replace the letters of the predetermined text content with meaningless characters.

Advantageously, the method further comprises the step of modifying the rule set, by the user of a telecommunications device, to accommodate the needs of that user.

The invention also provides a telecommunications device comprising a transceiver, a processor and a display, the processor including software, means for reading an incoming message, means for modifying the message if that message breaks a rule of the rule set whereby a modified message is displayed, wherein the rule set comprises a plurality of rules, each of which relates to a respective predetermined message content, characterised in that the mobile telecommunications device comprises means for downloading a rule set into the software from a network operator.

Preferably, the software is such that a user of the device can modify the rule set.

In a preferred embodiment, the device further comprises data input means linked to the processor for modifying the rule set. Conveniently, a keypad constitutes the data input means.

The software may be such as to parse the incoming text message, and such as to delete the predetermined text content, or to replace letters of the predetermined text content with meaningless characters.

The device may further comprise means for modifying the rule set, to accommodate the needs of a user, on input of a modification of the rule set by the user.

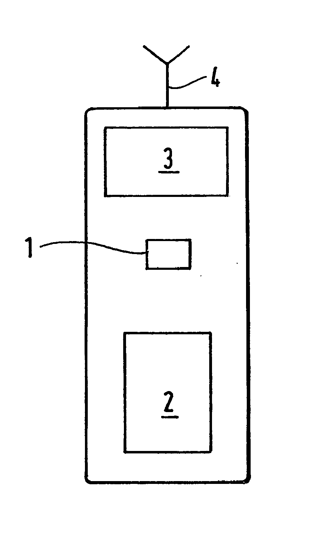

The invention will now be described in greater detail, by way of example, with reference to the drawing, the single figure of which is a schematic representation of a mobile phone.

Referring to the drawing, a mobile phone includes a processor 1, a keypad 2, a display 3 and an antenna 4. The keypad 2 can be used, in known manner, to input text messages for processing by the processor 1 and transmitting via the antenna 4, to the mobile phones of other users. Text messages received from other users via the antenna 4 are processed by the processor 1 and shown on the display 3.

In order to carry out the invention, a rule set is input into the processor 1. The inputting of the rule set can be carried out prior to the purchase of the mobile phone, or can be downloaded from a network operator via the antenna 4. In either case, the rule set can be modified to comply with the individual needs of the user of the mobile phone, the operator of the mobile network, or even by particular local requirements. For example, there may be local requirements for content filtering based on both the fashion of the day and the geographical location. In particular, new vernacular words, specifically those which might cause offence, enter and leave the language regularly, due to the fact that language is ever changing. In addition, some words and phrases only have an offensive meaning in certain geographical locations (for example the word "fag" is offensive in the USA, but not in the UK). The mobile network operator may also be provided with facility for pre-storing the rule set, for downloading the rule set, and/or permitting the user to edit the rule set on the mobile phone.

The rule set will be an algorithm which will first parse each incoming text message, and then each rule will, in turn, read the parsed text content to determine whether or not that particular rule has been violated. For example, one rule may search for a given rude word, other rules may search for other rude words, and yet other rules may search for particular words or phrases of a racist character. The rule set is such that, if a given rule is violated, the software (the algorithm) will then process the message in accordance with that rule, for example, by deleting the text content which violates the rule, or by modifying that text content, for example, or by replacing the text letters with meaningless characters such as asterisks. Thus, each rule may have different modifying actions for given degrees of offensiveness. In particular, if the rule is to look for one of a given list of "four letter" words, the user could modify the basic rule set originally input into the processor 1, so as to vary the actions carried out in dependence upon how that user rates the offensiveness of the various words in the list. In this case for text content which is deemed least offensive by the user, the rule set may be such as to allow that content to be displayed.

It will be apparent that modifications could be made to the invention as described above with reference to the drawing. In particular, data input can be carried out by any suitable means, and is not restricted to the use of the keypad 2. For example, data could be input into the mobile phone 1 by downloading from a PC, or by utilising speech recognition software. In this connection, data input covers both the inputting of text messages and any modification of the rule set contained in the mobile phone 1. It will also be apparent that the invention is not restricted to the filtering of messages received by mobile phones, and is also applicable to other devices such as personal digital assistants (PDAs) and wireless gaming devices. Moreover, the invention is equally applicable to the filtering of other forms of messages received by communications devices such as mobile phones, and is not restricted to the filtering of the content of text messages.

## Claims

1. A method of filtering text messages, the method comprising the steps of:-
a) inputting a rule set;
b) reading an incoming message;
c) modifying the message if that message breaks a rule of the rule set; and
d) displaying the modified message;
wherein the rule set comprises a plurality of rules, each of which relates to a respective predetermined message content, **characterised in that** the text messages are received by a mobile telecommunications device and the rule set is input into the telecommunications device by downloading the rule set from a network operator.

2. A method as claimed in claim 1, wherein step b) includes the step of parsing the incoming text message.

3. A method as claimed in claim 1 or claim 2, wherein step c) is such as to delete the predetermined text context, or to replace the letters of the predetermined text content with meaningless characters.

4. A method according to any one of claims 1 to 3, the method further comprising the step of:-
e) modifying the rule set, to accommodate the needs of a user, by that user inputting a modification to the rule set.

5. A mobile telecommunications device comprising a transceiver, a processor and a display, the processor including software, means for reading an incoming text message, means for modifying the message if that message breaks a rule of the rule set whereby a modified message is displayed, wherein the rule set comprises a plurality of rules, each of which relates to a respective predetermined message content, **characterised in that** the mobile telecommunications device comprises means for downloading a rule set into the software from a network operator.

6. A device as claimed in claim 5, wherein the software is such that a user of the device can modify the rule set.

7. A device as claimed in claim 6, further comprising data input means linked to the processor for modifying the rule set.

8. A device as claimed in claim 7, wherein a keypad constitutes the data input means.

9. A device as claimed in any one of claims 6 to 8, wherein the software is such as to parse the incoming text message.

10. A device as claimed in claim 9, wherein the software is such as to delete the predetermined text content, or to replace letters of the predetermined text content with meaningless characters.

11. A mobile telecommunications device according to any one of claims 5 to 10 further comprising means for modifying the rule set, to accommodate the needs of a user, on input of a modification of the rule set by that user.

## Patentansprüche

1. Verfahren zum Filtern von Textnachrichten, wobei das Verfahren folgende Schritte umfasst:
a) Eingeben eines Regelsatzes;
b) Lesen einer ankommenden Nachricht;
c) Modifizieren der Nachricht, wenn diese Nachricht gegen eine Regel des Regelsatzes verstößt; und
d) Anzeigen der modifizierten Nachricht;
wobei der Regelsatz mehrere Regeln umfasst, von denen jede sich auf einen jeweiligen vorgegebenen Nachrichteninhalt bezieht, **dadurch gekennzeichnet, dass** die Textnachrichten von einem mobilen Telekommunikationsgerät empfangen werden und der Regelsatz durch Herunterladen des Regelsatzes von einem Netzbetreiber in das Telekommunikationsgerät eingegeben wird.

2. Verfahren nach Anspruch 1, wobei Schritt b) den Schritt des Analysierens der ankommenden Textnachricht enthält.

3. Verfahren nach Anspruch 1 oder Anspruch 2, wobei Schritt c) so ausgeführt wird, dass der vorgegebene Textkontext gelöscht wird oder dass die Buchstaben des vorgegebenen Textinhalts durch bedeutungslose Zeichen ersetzt werden.

4. Verfahren nach einem der Ansprüche 1 bis 3, wobei das Verfahren des Weiteren folgenden Schritt umfasst:
e) Modifizieren des Regelsatzes, um die Bedürfnisse eines Nutzers zu berücksichtigen, in der Weise, dass der betreffende Nutzer eine Modifizierung des Regelsatzes eingibt.

5. Mobiles Telekommunikationsgerät, das einen Sender-Empfänger, einen Prozessor und ein Anzeigefeld umfasst, wobei der Prozessor Folgendes enthält: Software, Mittel zum Lesen einer ankommenden Textnachricht, und Mittel zum Modifizieren der Nachricht, wenn diese Nachricht gegen eine Regel des Regelsatzes verstößt, wodurch eine modifizierte Nachricht angezeigt wird; wobei der Regelsatz mehrere Regeln umfasst, von denen jede sich auf einen jeweiligen vorgegebenen Nachrichteninhalt bezieht, **dadurch gekennzeichnet, dass** das mobile Telekommunikationsgerät Mittel zum Herunterladen eines Regelsatzes in die Software von einem Netzbetreiber umfasst.

6. Gerät nach Anspruch 5, wobei die Software so gestaltet ist, dass ein Nutzer des Gerätes den Regelsatz ändern kann.

7. Gerät nach Anspruch 6, das des Weiteren ein Dateneingabemittel, das mit dem Prozessor verknüpft ist, zum Modifizieren des Regelsatzes umfasst.

8. Gerät nach Anspruch 7, wobei das Dateneingabemittel durch ein Tastenfeld gebildet wird.

9. Gerät nach einem der Ansprüche 6 bis 8, wobei die Software so gestaltet ist, dass sie die ankommende Textnachricht analysiert.

10. Gerät nach Anspruch 9, wobei die Software so gestaltet ist, dass sie den vorgegebenen Textinhalt löscht oder Buchstaben des vorgegebenen Textinhalts durch bedeutungslose Zeichen ersetzt.

11. Mobiles Telekommunikationsgerät nach einem der Ansprüche 5 bis 10, das des Weiteren Folgendes umfasst: ein Mittel zum Modifizieren des Regelsatzes, um die Bedürfnisse eines Nutzers zu berücksichtigem, wenn eine Modifikation des Regelsatzes durch den betreffenden Nutzer eingegeben wird.

## Revendications

1. Procédé de filtrage de messages textuels, le procédé comprenant les étapes consistant en :
a) la saisie d'une règle énoncée ;
b) la lecture d'un message entrant ;
c) la modification du message si ce message ne répond pas à la règle énoncée ; et
d) l'affichage du message modifié ;
dans lequel la règle énoncée comprend une pluralité de règles, chacune d'entre elles concernant respectivement le contenu d'un message prédéterminé, **caractérisé en ce que** les messages textuels sont reçus par un appareil de télécommunication mobile et la règle énoncée est saisie dans l'appareil de télécommunication par le téléchargement de la règle énoncée à partir d'un opérateur de réseau.

2. Procédé selon la revendication 1, dans lequel l'étape b) inclut l'étape d'analyse du message textuel entrant.

3. Procédé selon les revendications 1 ou 2, dans lequel l'étape c) est de nature à supprimer un contenu prédéterminé du texte ou à remplacer les lettres du contenu prédéterminé du texte par des caractères dépourvus de signification.

4. Procédé selon l'une des revendications 1 à 3, le procédé comprenant en outre l'étape consistant en :
e) la modification de la règle énoncée, afin de s'adapter aux besoins d'un utilisateur, par la saisie de la modification de la règle énoncée par cet utilisateur.

5. Un appareil de télécommunication mobile comprenant un émetteur-récepteur, un processeur et un affichage, le processeur incluant un logiciel, des moyens pour lire un message textuel entrant, des moyens pour modifier le message si ce message ne répond pas à la règle énoncée en vertu desquels un message modifié est affiché, dans lequel la règle énoncée comprend une pluralité de règles, chacune d'entre elles concernant respectivement le contenu d'un message prédéterminé, **caractérisé en ce que** l'appareil de télécommunication mobile comprend des moyens pour télécharger une règle énoncée dans un logiciel à partir d'un opérateur de réseau.

6. Un dispositif selon la revendication 5, dans lequel le logiciel est de nature à ce que l'utilisateur du dispositif puisse modifier la règle énoncée.

7. Un dispositif selon la revendication 6, comprenant en outre des moyens de saisie de données liés au processeur afin de modifier la règle énoncée.

8. Un dispositif selon la revendication 7, dans lequel un clavier constitue les moyens de saisie de données.

9. Un dispositif selon l'une des revendications 6 à 8, dans lequel le logiciel est de nature à analyser le message textuel entrant.

10. Un dispositif selon la revendication 9, dans lequel le logiciel est de nature à supprimer un contenu prédéterminé du texte ou à remplacer les lettres du contenu prédéterminé du texte par des caractères dépourvus de signification.

11. Un appareil de télécommunication mobile selon l'une des revendications 5 à 10 comprenant en outre des moyens pour modifier la règle énoncée, afin de s'adapter aux besoins d'un utilisateur, par saisie d'une modification de la règle énoncée par cet utilisateur.
